## Europäisches Patentamt

## European Patent Office

## Office européen des brevets

(11) Publication number: **0 102 899**
**A1**

# (12) EUROPEAN PATENT APPLICATION

(21) Application number: **83401711.3**

(22) Date of filing: **26.08.83**

(51) Int. Cl.³: **H 01 B 13/22**
**H 01 B 7/12**

(30) Priority: **02.09.82 US 414150**

(43) Date of publication of application:
**14.03.84 Bulletin 84/11**

(84) Designated Contracting States:
**DE FR GB IT NL**

(71) Applicant: **Schlumberger Limited**
**277 Park Avenue**
**New York, N.Y. 10172(US)**

(84) Designated Contracting States:
**DE GB NL**

(71) Applicant: **SOCIETE DE PROSPECTION ELECTRIQUE**
**SCHLUMBERGER**
**42, rue Saint-Dominique**
**F-75340 Paris Cedex 07(FR)**

(84) Designated Contracting States:
**FR IT** -

(72) Inventor: **McNerney, Richard P.**
**10307 Clifford**
**Houston Texas 77035(US)**

(72) Inventor: **Gilmore, Kevin G.**
**2914 Rifle Gap**
**Sugar Land Texas 77478(US)**

(74) Representative: **Chareyron, Lucien et al,**
**Schlumberger Limited 42, rue Saint-Dominique**
**F-75340 Paris Cedex 07(FR)**

(54) **Method for making a solid flotation cable.**

(57) To produce a solid, incompressible floatation cable, a cable core is continuously jacketed with a resin foam. The foam is a rapidly curing, microballoon-containing resin which is molded in a moving, endless double belt mold. The foam parameters such as specific gravity, viscosity, and cure rate are predetermined and the foam temperature during mixing and curing is controlled to produce stable and uniform results. -

FIG.2

EP 0 102 899 A1

Croydon Printing Company Ltd.

# METHOD FOR MAKING A SOLID FLOATATION CABLE

## Background of the Invention

In marine seismic exploration, seismic data is often acquired offshore by towing a specialized cable behind a ship. The cable may contain many arrays containing up to 30 hydrophones connected together. Each array is connected to a shipboard recording system. The total cable length is variable, but two miles is typical.

A seismic source, usually compressed air injection near the ship, creates the acoustic signal. The reflection of that signal from subsurface strata is detected by the hydrophones. For deep-water operations, the cable is typically moved or pulled continuously through the water, for example at 4 to 7 knots. Taking advantage of this movement, the depth of the cable is controlled, usually to a depth of 20-40 feet, by the action of devices known as "birds". The birds have adjustable winged surfaces, and the attitudes of the wing surfaces are controlled to maintain the desired depth. The birds are usually mounted on the cable at approximately 600 foot intervals.

For shallow water, a bottom reference configuration is used, the cable being dragged along the bottom in a so-called "drag cable" operation. In such shallow water bottom-reference operations, chains are usually attached every 100 feet to the normally buoyant cable. As each chain settles onto the bottom, weight is released until a condition of neutral buoyancy occurs, positioning the cable several feet above the sea bottom. A cable weighted by chains can be dragged at approximately 2 knots. However, a more popular method for bottom-reference operations with a weighted cable is the "yo-yo". Here the cable is periodically reeled in quickly and then unspooled slowly while the ship continues moving forwardly at a steady 2 knots. Data is recorded during the unspooling phase.

Finally, another common type of operation is the "stationary cable" mode in which the cable is staked to the sea bottom. This operation, more often carried out with smaller ships, is time consuming.

To make such cables essentially neutrally buoyant, commonly employed cables consist of a kerosene-filled hose enclosing hydrophones, electrical wires, plastic spacers and steel ropes. The kerosene provides buoyancy; the plastic spacers and steel ropes furnish structural support and tensile strength. A hydrophone is mounted between the spacers, usually at approximately 3-foot intervals. Electrical wire bundles then pass through holes in the spacers and connect to the hydrophones. Covering this structure is a thin-walled plastic hose having an outside diameter, typically, of two to three inches. The hose is filled with electrical-grade kerosene or another oil of similar density to provide the desired buoyancy. Buoyancy trimming is then often accomplished by strapping lead weights to the outside of the cable.

Such prior art cables have several distinct disadvantages. For example, with increasingly longer cable configurations, and more complex hydrophone electrical connections in these cables, more wire pairs and stronger strength members must be used. This results in increased weight which must be compensated by an increase in the oil volume, to maintain a condition near neutral buoyancy. This results in cables which become larger and larger (i.e., increasingly larger diameters), and such cables are more difficult to handle and to store.

Another major disadvantage of prior art liquid-filled cables is the substantial cable maintainance required. Jacket cuts occur, often because of improper handling or collisions with other ships, subsea structures, or debris. Kerosene leakage causes buoyancy loss and the need for immediate replacement. Salt water intrusion causes electrical shorts. Replacement rates for drag cables are particularly high. In some areas, exploration surveys have had to be terminated because of excessive damage to bottom-reference cables. The kerosene-filled cable also requires intermittent buoyancy adjustment due to such factors as small leaks or salinity and temperature changes. Such adjustments are often difficult to perform accurately aboard a ship. Also, a kerosene-filled cable poses a distinct fire hazard.

A need thus remains for an effective, versatile, and reliable method for manufacturing a floatation cable having stable floatation characteristics, durability in bottom-reference operations, and which is free of the numerous disadvantages of the liquid (oil) filled floatation cables used heretofore.

- 4 -

It is therefore a general object of the present invention to provide a new and improved method for the preparation of a solid floatation cable.

This and other objects are attained, in accordance with one aspect of the invention by a method for continuously molding a solid floatation cable, comprising: (a) pulling a cable core through, and in synchronism with, a moving mold, (b) surrounding the cable with a curable foam for filling the space within the mold, (c) curing the foam within the mold around the cable core as the cable core, mold, and foam move together, and (d) releasing the newly formed floatation cable from the mold after the foam has cured.

Other objects and advantages of the invention will be apparent from the following description, the accompanying drawings and the appended claims.


Brief Description of the Drawings


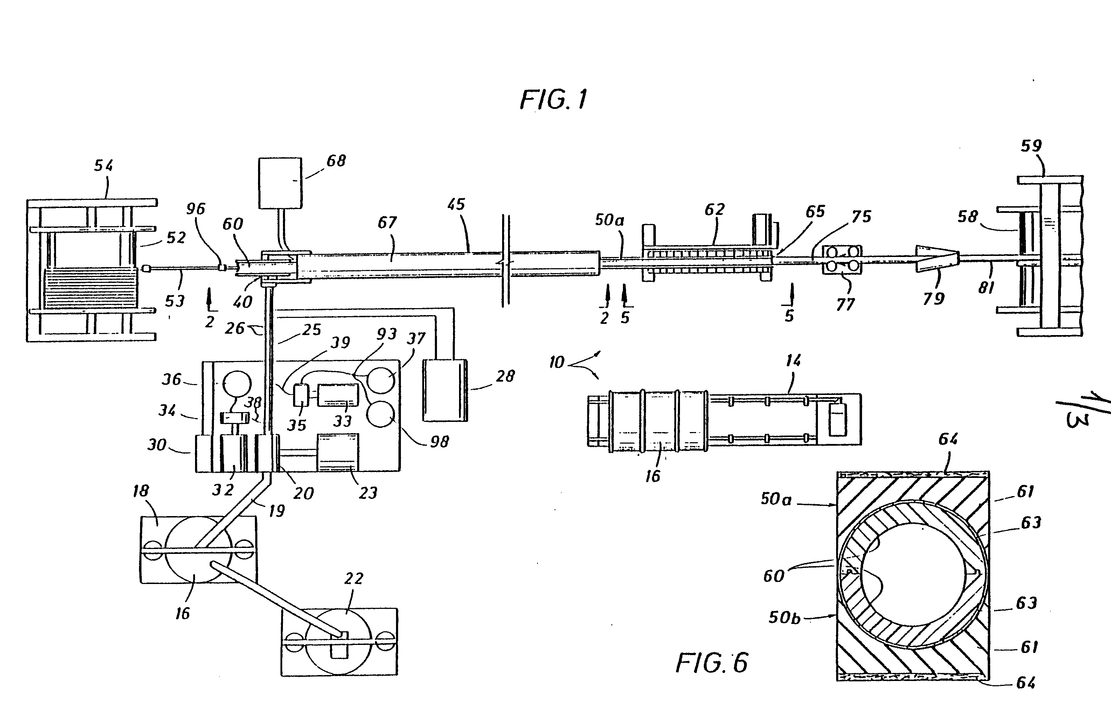

Fig. 1 is a plan view of an apparatus for making a floatation cable according to the present invention;

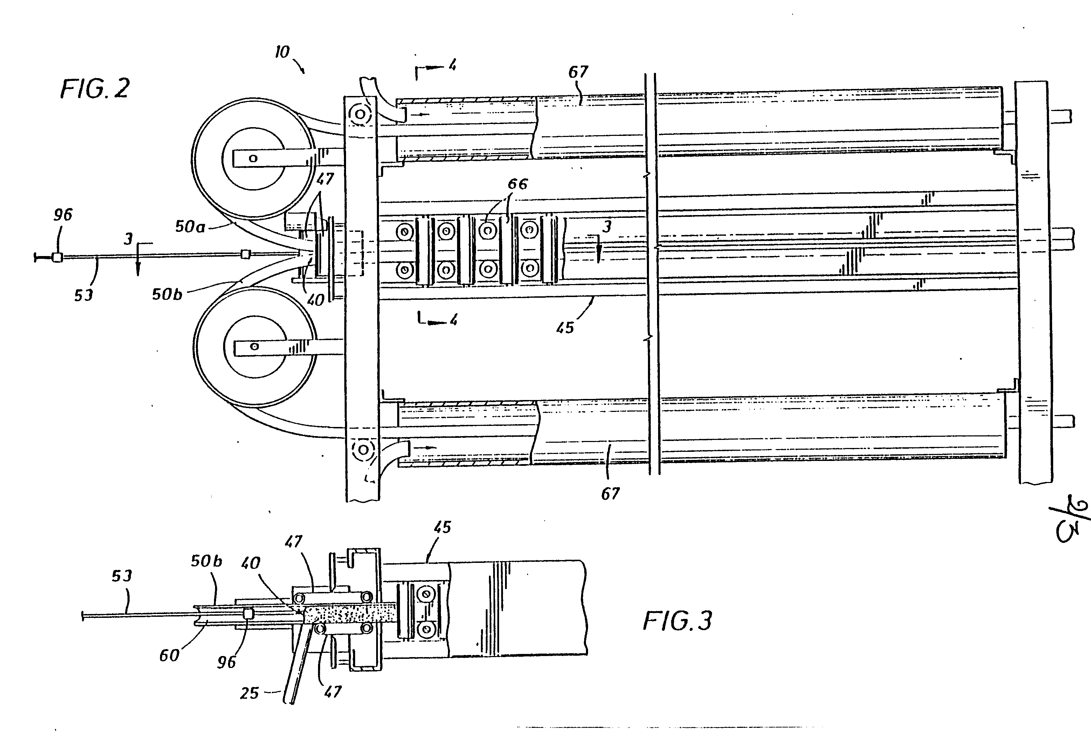

Fig. 2 is a side view, partially in section, of the upstream end of the apparatus taken on view line 2-2 in Fig. 1;

Fig. 3 is a cross-sectional view taken on line 3-3 in Fig. 2;

Fig. 4 is a cross-sectional view taken on line 4-4 in Fig. 2;

Fig. 5 is a side view of the downstream end of the apparatus taken on view line 5-5 in Fig. 1; and

Fig. 6 is a cross-sectional view showing engagement of the flexible belt molds and constructional details thereof.

## Description of the Preferred Embodiment

With reference to the drawings, the foam is usually received and stored as a premixed resin (for example, XJT 1-26A, Fluid Polymer Systems, El Cajon, California) containing glass microballoons (such as FTD 202, Emerson & Cuming, Inc). Near the molding apparatus 10 is a rotator 14 on which 55-gallon drums or barrels 16 of the premixed foam are stored prior to use in the apparatus 10. The rotator 14 receives the drums on their sides and rotates them continuously to assure that the microballoons, which tend to float, are uniformly dispersed in the resin.

When the cable is prepared, a barrel 16 of foam is placed on a transfer device 18. A suitable such device is available from Pyles Industries Inc., Wixom, Michigan, 48096. This transfer device pressurizes the foam and pushes it through a feed hose 19 to a positive displacement vane pump 20. If more than 55 gallons of foam is required, additional drums or barrels such as barrel 22 can be connected to barrel 16 to replenish or refill it, as by transferring the foam from barrel 22 under high pressure (e.g., 500 psi) in a Pyles replenisher.

Vane pump 20 is driven by a variable speed pump motor 23 to provide an adjustable, constant volume output (typically at pressures up to 400 psi) while minimizing attrition of the glass microballoons in the foam. Pump 20 pumps the foam through a continuous mixer or mixing tube 25 which is wrapped with cooling coils 26. The cooling coils, connected to a chilling unit 28,

0102899 125

are for initially retarding the curing of the foam (the curative having been added at that point), until the foam is in position within the mold portion of apparatus 10.

During initial setup, no curative is added. Instead, a foam sample is drawn from the mixing tube 25 for measurement of its specific gravity. From this the volumetric concentration or percentage of resin within the foam is calculated so that the proper ratio of a suitable accelerator, and of the curative, can be determined.

The ratio of accelerator and of curative to foam is then set in a ratio control 30 to which both the vane pump motor 23 and two metering pump motors 32 and 33 are slaved. Metering pump motors 32 and 33, in turn, drive respective accelerator metering and curative metering pumps 34 and 35 which, when apparatus 10 is in full operation, deliver the accelerator and curative from respective accelerator and curing agent containers 36 and 37 through respective feed lines 38 and 39 into the inline, continuous mixing tube 25 for mixing and chilling with the foam therein. A suitable curative or curing agent is XJT 1-26B (Fluid Polymer Systems) and the accelerator used therewith is dibutyl tin dioctoate (T-8) M & T. Prior to placing the system in operation, however, it is desirable to measure the actual cure curve of the foam to assure the stability of the cure rate. This may be conveniently done, for example, using a Brabender "Plasti-Corder" (S. W. Brabender Instruments, Inc., South Hackensack, New Jersey).

Next the pumps 20, 34 and 35 are started. As normally desired, the curing agent feed line 39 and accelerator feed line 38 may first be disconnected from mixing tube 25 permitting the foam, accelerator, and curing agent to be separately collected for a final, preliminary test (e.g. via hand mixing). Then the apparatus 10 is placed in full operation by connecting the curative and accelerator feedlines 38 and 39 to mixing tube 25. The pumps are operated for a short period to purge any previous materials (e.g., unaccelerated foam) from the mixing tube 25 and then the mixing tube is connected to the foam injection area 40 of apparatus 10.

The foam injection area 40 is at the beginning of the molding line, generally referred to by reference numeral 45. On either side of the foam injection area 40 is a pair of opposed belts 47 which are driven to conduct and guide the foam into a pair of facing, complimentary, endless belt molds 50a and b as they are closing at area 40. Belts 47 prevent "dead" spots from forming in the foam in the injection area.

A reel 52 of cable core 53 is supported in a payoff 54 near the foam injection area 40 at the closing area or region 40 where the endless belt molds come together during operation of the molding line 45. Reel 52 and payoff 54 are aligned with the molding line 45, and at startup, a lead line (not shown) of a diameter smaller than the cable core 53 is passed through the closed portion of the flexible belt molds 50 and onto the takeup reel 58 mounted on the takeup 59. The lead line 56 is small so that the belt molds 50a and b can be driven without pulling the cable core 53.

The endless belt molds 50a and b are propelled by a caterpuller 62 which rotates the belt molds as illustrated. The belt molds thus move together at the foam injection area 40 and travel together, under the guidance and pressure of alternating horizontal and vertical rollers 66 in the molding line 45, to a separation area 65. The rollers 66 maintain the critical dimensions of the cable while in line 45.

At the separation area 65, the belts are peeled away from each other and from the cable. The endless belts then return to the closing or foam injection area 40 through heated guide assemblies 67 which preheat the belt molds 50a and b. The heat is supplied from a warm air heater 68 which feeds warmed air into the guide assemblies 67. The preheating of the endless belt molds 50a and b prior to reaching the closing area 40 is designed to promote or accelerate the curing of the foam after the foam is in place in the mold and formed onto the cable core.

The belt molds 50a and b are preferably formed of a flexible release material. The flexible material at the foam-engaging surface 60 preferably has a low surface bonding energy to facilitate release from the foam, which is itself an aggressive bonding material which possesses residual tackiness even after curing. Such tackiness discourages the use of rigid molds since, even with release coatings, substantial force is needed to separate the mold from the foam in a single movement, and this could damage the foam. With a flexible mold, the mold can be opened progressively, thereby minimizing the opening force required at any given moment.

Two of the elastomers which are preferred for the mold releasing material are silicone and ethylene propylene rubber (EPR). Silicone is available as a room temperature curable liquid material, making it particularly attractive for fabricating large articles in light duty molds. Its physical properties and its expense, however, are less than ideal. In the preferred embodiment, therefore, the foam-engaging surface 60 (see Fig. 6) was molded of silicone, but the balance or backing 61 of the belts 50a and b was made of polyurethane, the two materials (60 and 61) being attached mechanically through an interface 63 of velour cloth. These mold belts 50a and b were additionally strengthened and stabilized by gluing a reinforcing belt 64 to the back surface of this backing material 61.

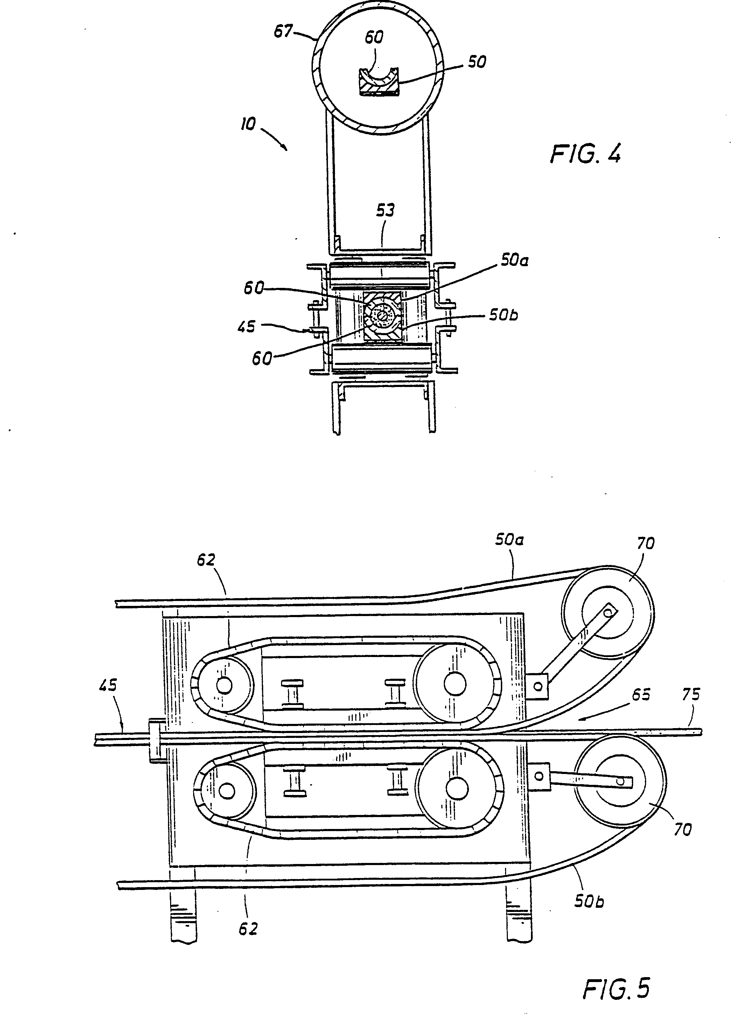

At the separation area 65 is a pair of turnaround sheaves 70 which, when molding line 45 is in operation, peel the belts away from the now cured foamed cable 75 (Fig. 5). Downstream from separation area 65 is a flash trimmer 77 which removes any flash found at the mold parting line. The cable then passes over a tape supply (not shown) to a tape wrapper 79 which wraps a tape 81 longitudinally along cable 75 to protect the cable surface from contamination before further jacketing.

In operation, the specific gravity, viscosity, and cure rate of the foam are first determined prior to molding the floatation cable. Preferably, these are closely controlled and kept stable and uniform throughout each batch for each particular cable being manufactured. The cure rate is set, as by running cure curves on a Brabender tester, using samples with various

0102899
25.125

levels of accelerator. The accelerator level is then set for the batch. The viscosity of the resin plus microballoons is also measured, as with a Brookfield HBT viscometer.

Just prior to manufacturing the cable, the foam resin is placed in the Pyles transfer device. The foam is then delivered by positive displacement vane pump 20 to provide an adjustable, constant output at a pressure which may be as high as 400 psi but with minimum attrition of the microballoons. The foam is then pumped through the chilled mixing tube 25, and after the proper ratio of accelerator and curative is determined, the curative/solvent selector valve 93 is set to deliver curative or curing agent from the curing agent container 37 through the metering pump 35. Due to the rapid curing of the foam, it is advantageous to assure proper metering before finally placing the molding line 45 in operation. Therefore, these liquids (foam resin, accelerator, and curative) are first tested, as by collecting them for identical periods of time and then hand mixing. The accelerator feed line 38 and the curative feed line 39 are then attached to the mixing tube 25 and the pumping system is turned on to purge unaccelerated foam from the mixing tube 25. At that time the mixing tube is positioned to feed the foam into the foam injection area 40.

The caterpuller 62 was previously turned on to rotate the belt molds 50a and b through the guide assemblies 67 to preheat the molds. When the accelerated foam is then injected into the foam injection area 40 (where the molds are closing), the takeup reel 58 is rotated by takeup 59 to pull the cable core 53 forward and into the belt molds 50a and b. These then pull the cable forward synchronously with the movement of the belt molds 50a and b. As the cable core is pulled in synchronism with the moving molds 50a and b, it may be centered, for example, by the hydrophone mounts 96 in the illustrated embodiment, which are typically positioned at three-foot intervals and may have substantially the same outer diameter as the foam molding.

The movement of the endless belt molds 50a and b and the rates of operation of pumps 20, 34, and 35 are controlled so that a slight excess of foam is first introduced into the foam injection area 40. Then the rates are matched so that the excess does not increase or decrease but is steadily replenished. The length of the molding line 45, in which the belt molds 50a and b remain closed, is about 35 feet. The belt mold portions 50a and b, of course, are propelled in unison with each other, for example at the rate of about 2 feet per minute. The curing rate of the foam, as previously described, has already been carefully determined to assure that it is sufficiently cured before the cable 75 reaches the turnaround sheaves 70.

At the exit of the caterpuller 62 the molds 50a and b reverse direction around turnaround sheaves 70, peeling the belt molds away from the cured cable 75 and returning to the foam injection area 40 through the heated guide assemblies 67. The cable is then trimmed of flash in the flash trimmer 77, wrapped in wrapper 79, and wound onto takeup reel 58.

When the tail end of the cable passes into the molding line 45, the selector valve 93 is positioned to provide solvent from solvent container 98 and to discontinue the supply of the curing agent. The mixing tube 25 is moved away from the foam injection area 40, and the remaining accelerated foam therein is purged.

As may be seen, therefore, the present invention provides numerous advantages. Principal among these is the ability to fabricate a solid floatation cable on a continuous basis. A cable of virtually any length may therefore be made without the necessity for laboriously fabricating and attaching individual sections of foam material. The method is therefore versatile, practical, effective, and suited for use in the widest range of applications.

While the method herein described constitutes a preferred embodiment of this invention, it is to be understood that the invention is not limited to this precise method, and that changes may be made therein without departing from the scope of the invention.

0102899

## CLAIMS

—13—

1. A method for continuously molding a solid floatation cable, characterized by:

a) pulling a cable core through, and in synchronism with, a moving mold,

b) surrounding the cable with a curable foam for filling the space within the mold,

c) curing the foam within the mold around the cable core as the cable core, mold, and foam move together, and

d) releasing the newly formed floatation cable from the mold after the foam has cured.

2. The method of claim 1 characterized in that said releasing step further comprises continuously releasing the newly formed and cured cable from the mold.

3. The method of claim 1 or 2 characterized by using a mold which is an endless belt mold.

4. The method of claim 3 characterized by continuously closing the mold about the cable as the mold and cable are moved in unison, injecting the foam into the mold closing area to surround the cable core, and continuously opening the mold after the foam has cured to release the cable.

5. The method of claim 3 or 4 characterized in that said pulling step further comprises propelling the clamshell belt mold portions in unison with one another, and controlling the curing rate such that the foam substantially cures before release from the mold.

6. The method of claim 3, 4 or 5 characterized by using a belt mold formed of a flexible release material, at the foam-engaging surface, and a flexible backing material.

7. The method of claim 6 characterized by using a belt mold wherein the release material is selected from the group consisting of ethylene propylene rubber and silicone rubber.

8. The method of claim 6 or 7 characterized by using a belt mold in which the backing material has a reinforced belt.

9. The method of any one of claims 4-8 characterized in that said opening step further comprises progressively opening the mold to minimize the opening force which is required.

10. The method of claim 9 characterized in that said opening step further comprises continuously peeling the mold portions away from the cured cable.

11. The method of any previous claim characterized by chilling the foam before surrounding the cable with it to retard curing of the foam until the foam is in place in the mold.

12. The method of any previous claim characterized by heating the mold to accelerate curing of the foam after the foam is in place in the mold.

13. The method of any previous claim wherein the foam is a curable resin containing microballoons.

14. The method of claim 13 characterized by substantially continuously mixing the foam during storage to keep the microballoons substantially uniformly dispersed therein.

15. The method of claim 13 or 14 characterized by mixing an accelerator with the uncured foam to control closely the cure rate thereof.

16. The method of any one of claims 4-15 characterized by continuously mixing a curative with the foam just prior to putting it into the space surrounding the cable within the mold.

17. The method of claim 16 characterized by testing and determining the specific gravity, viscosity, and cure rate of the foam prior to molding the floatation cable therewith.

18. The method of any previous claim characterized by enclosing the cable after release from the mold to protect the cable surface.

-16-

19.    The method of claim 18 characterized in that said enclosing step comprises wrapping a protective tape film longitudinally along the cable to protect the cable surface from contamination before further jacketing.

20.    The method of any previous claim characterized by trimming any flash from the cable found at the mold parting line after release from the mold.

FIG.1

FIG.6

FIG.2

10

4

67

47

96

66

50a

3

3

53

45

50b

40

4

67

45

47

53

50b

40

47

60

96

25

FIG.3

2/3

0102899

3/3

FIG. 4

FIG. 5

0102899

## European Patent Office

## EUROPEAN SEARCH REPORT

Application number

| DOCUMENTS CONSIDERED TO BE RELEVANT | | | EP 83401711.3 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | CH - A - 400 275 (STANDARD TELE-PHON) | 1-6,12, 16,18 | H 01 B 13/22 <br> H 01 B 7/12 |
| Y | * Page 1, lines 1-41, page 1, line 67 - page 3, line 45; fig. 1,2 * | 13,14 | |
| Y | US - A - 3 740 454 (ARNDT et al.) | 1,13, 14 | |
| | * Column 4, line 63 - column 5, line 38 * | | |
| A | US - A - 4 110 554 (MOORE et al.) | 1 | |
| | * Abstract * | | |

TECHNICAL FIELDS SEARCHED (Int. Cl. ³)

H 01 B

The present search report has been drawn up for all claims

| Place of search | Date of completion of the search | Examiner |
|---|---|---|
| VIENNA | 28-11-1983 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82